# EUROPEAN PATENT APPLICATION

(11) **EP 4 203 139 A1**
(43) Date of publication of application: **28.06.2023**
(21) Application number: 22159161.3
(22) Date of filing: 28.02.2022
(51) Int. Cl.: H01M 10/42, H01M 10/48, H01M 50/209, H01M 50/289, H01M 50/507, H01M 50/519, H01M 50/569

(54) **BATTERY APPARATUS**

(30) Priority: 21.12.2021 CN 202123231199 U
(71) Applicant: CALB Co., Ltd., Changzhou City, Jiangsu Province (CN)
(72) Inventor: Yang, Huijie, Changzhou City (CN); Du, Xiaoyuan, Changzhou City (CN); Liu, Jianhua, Changzhou City (CN); Wang, Tongshuai, Changzhou City (CN)
(74) Representative: Becker, Eberhard

(57) **Abstract**

A battery apparatus includes a plurality of batteries (1) arranged in parallel, at least two busbars (2) and at least one temperature acquisition unit (3). In a stacking direction of the plurality of batteries (1), the temperature acquisition unit (3) is arranged between adjacent two of the busbars (2).

## Description

### BACKGROUND

### Technical Field

The disclosure relates to the technical field of batteries, in particular to a battery apparatus.

### Description of Related Art

Temperature is an important parameter of battery modules and battery packs. In the battery modules and battery packs, the temperature of a battery is acquired through a temperature acquisition unit. In existing technologies, the temperature acquisition unit is typically arranged at the connection region between the busbar and the flexible circuit board, and the temperature of the upper cover of the battery is acquired by the busbar. As a result, a larger space of the busbar is occupied and a greater impact is caused on the flow area of the busbar.

### SUMMARY

The disclosure provides a battery apparatus.

The battery apparatus provided by the disclosure includes a plurality of batteries arranged in parallel, at least two busbars, and at least one temperature acquisition unit. In a stacking direction of the batteries, the temperature acquisition unit is arranged between adjacent two of the busbars.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a top schematic structural view of a battery apparatus according to an embodiment of the disclosure.
FIG. 2 is a partial top structural view of a battery apparatus according to an embodiment of the disclosure.
FIG. 3 is a partial structural view of a top portion of a battery apparatus according to another embodiment of the disclosure.
FIG. 4 is a partial exploded structural view of a battery apparatus according to an embodiment of the disclosure.
FIG. 5 is a partial structural view of a battery apparatus according to an embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

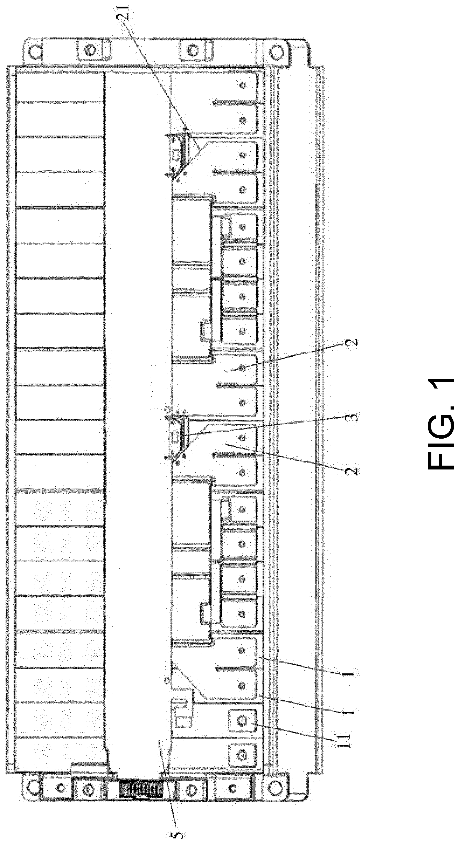

In a first aspect, as shown in FIG. 1, FIG. 2 and FIG. 3, the disclosure provides a battery apparatus. The battery apparatus includes a plurality of batteries 1 arranged in parallel, at least two busbars 2 located above the plurality of batteries 1, and at least one temperature acquisition unit 3. In a stacking direction of the plurality of the batteries 1, the temperature acquisition unit 3 is arranged between adjacent two of the busbars 2.

In the battery apparatus of the disclosure, the temperature acquisition unit 3 is arranged between two adjacent busbars 2, so that the gap between the two busbars 2 can be fully utilized to reduce the occupied layout space in the busbars 2. Moreover, the temperature acquisition unit 3 will only occupy the peripheral area of the busbars 2 with lower current density and therefore has less influence on the overcurrent area of the busbars 2. To sum up, in the battery apparatus of the disclosure, the temperature acquisition unit 3 occupies less space of the busbar, and has little influence on the overcurrent area of the busbars 2, so the performance of the battery apparatus can be improved.

Exemplarily, the battery apparatus in this disclosure may be a battery module or a battery pack.

In some embodiments, as shown in FIG. 1, FIG. 2 and FIG. 3, each busbar 2 includes two connection ends, one of the connection ends is connected to the post terminal 11 of the battery 1, and the temperature acquisition unit 3 is arranged at the other one of the connection ends of the busbar 2. For example, the battery apparatus further includes a circuit board 5. One connection end of the busbar 2 is connected to the post terminal 11 of the battery 1, and the other connection end is connected to the circuit board 5. The temperature acquisition unit 3 is arranged at one end of the busbar 2 close to the circuit board 5.

The overcurrent of the connection end of the busbar 2 close to the post terminal 11 of battery 1 is relatively high, and the overcurrent of the connection end away from the post terminal 11 of the battery 1 is relatively low. The temperature acquisition unit 3 is arranged at the connection end of the busbar 2 away from the post terminal 11 of the battery 1, so that the temperature acquisition unit 3 occupies the area of the busbar 2 with a lower current density, and therefore has less influence on the overcurrent area of the busbar 2.

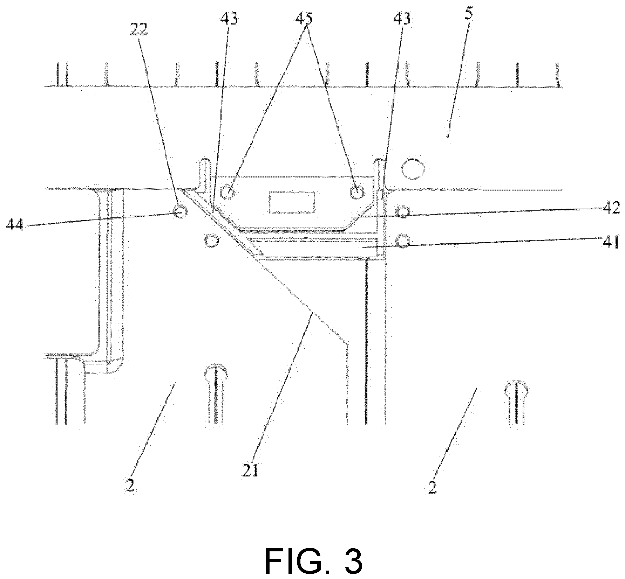

In some embodiments, as shown in FIG. 1 and FIG. 3, among two adjacent busbars 2, at least one busbar 2 is provided with a notch 21 to form a space for accommodating the temperature acquisition unit 3.

For example, as shown in FIG. 1 and FIG. 3, in the adjacent two busbars 2, one busbar 2 is provided with a bevel notch 21 to leave more space for placing the temperature acquisition unit 3, and the other busbar 2 may have a normal shape.

In some embodiments, as shown in FIG. 1, FIG. 2 and FIG. 3, the post terminal 11 of each battery 1 is arranged on the top cover of the battery 1. The busbars 2, the temperature acquisition units 3 and the circuit board 5 are all located above the plurality of batteries 1.

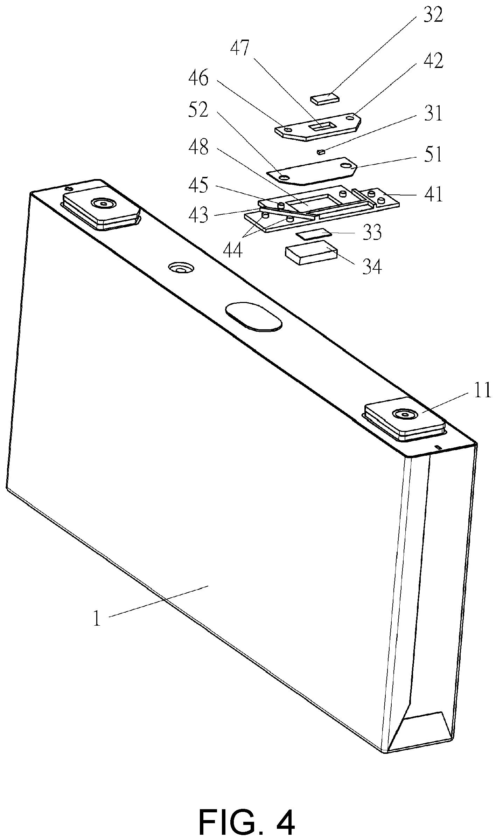

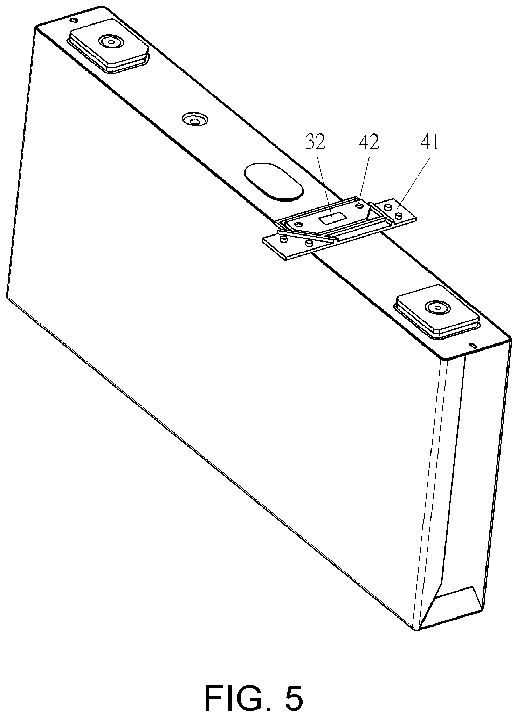

In some embodiments, as shown in FIG. 4 and FIG. 5, the temperature acquisition unit 3 is in contact with the top cover of the battery 1. In this way, the temperature inside the battery 1 can be directly transmitted from the top cover of the battery 1 to the temperature sensor in the temperature acquisition unit 3. Compared to the method of conventional design which transmits the temperature of the top cover of the battery 1 to the temperature sensor through the busbar and the flexible circuit board, the path of acquiring the temperature in this disclosure is shorter, and the accuracy of acquired temperature is higher.

In some embodiments, as shown in FIG. 1, FIG. 2, FIG. 3, FIG. 4 and FIG. 5, each temperature acquisition unit 3 includes a temperature acquisition structure 31 and a holder 41. The temperature acquisition structure 31 includes a negative temperature coefficient (NTC) temperature sensor and configured for acquiring the temperature of the battery apparatus. The holder 41 is configured to fix the temperature acquisition structure 31, the holder 41 partially extends to one side of the lower surface of the busbar 2, and the busbar 2 is pressed on the holder 41, that is, the busbar 2 is pressed against part of the structure of the holder 41 described above.

Specifically, the holder 41 is arranged between two adjacent busbars 2, and the temperature acquisition structure 31 can be fixed between the two adjacent busbars 2 through the holder 41. The periphery of the holder 41 extends to the position between the busbar 2 and the upper cover of the battery 1, so that the position of the temperature acquisition unit 3 can be limited between the busbar 2 and the battery 1 to prevent the holder 41 from moving up and down. Moreover, the periphery of the holder 41 extends to the lower surface of the busbar 2 and abuts against the busbar 2. The holder 41 is pressed against the two adjacent busbars 2, so that the temperature acquisition structure 31 is adjacent to the upper cover of the battery 1, thereby facilitating acquisition of the temperature of the battery 1.

In some embodiments, the holder 41 is provided with position-limiting structures for cooperating with the busbars 2. Through these position-limiting structures, the position of holder 41 can be limited between two adjacent busbars 2, so that the holder 41 is fixed relative to the busbar 2.

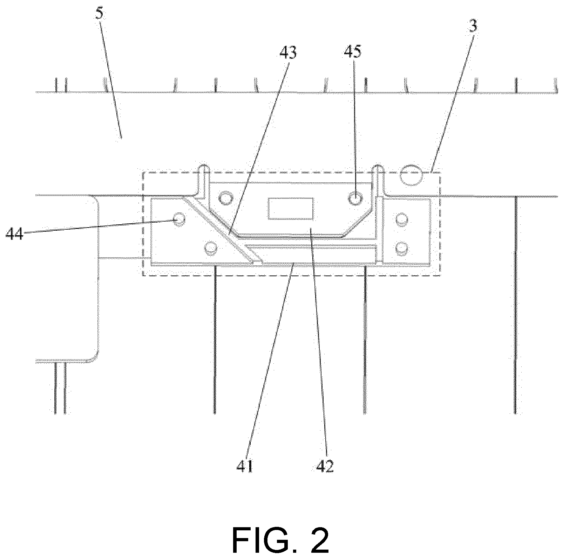

Exemplarily, as shown in FIG. 2 and FIG. 3, the position-limiting structure may include a position-limiting rib 43, and the position-limiting rib 43 is configured to abut against the sidewall of the busbar 2, so that the holder 41 can be clamped between the two busbars 2 to prevent the busbars 2 from moving left and right. Specifically, the position-limiting rib 43 includes two inclined ribs and a transverse rib, wherein side surfaces of the inclined ribs respectfully abut sidewalls of the busbars 2, and two ends of the transverse ribs are respectively connected to the two inclined ribs. Moreover, the position-limiting rib 43 can also be used as a positioning structure, which can facilitate the configuration and positioning of the holder 41 and the two busbars 2. And/or, the position-limiting structure may further include a first positioning column 44, and the first positioning column 44 is engaged with the busbar 2. Preferably, the first positioning column 44 and the busbar 2 are interference-fitted. For example, the busbar 2 is provided with a first through hole 22, and the first positioning column 44 is inserted into the first through hole 22 on the busbar 2, so that the holder 41 is engaged with the two busbars 2; or, the busbar 2 is provided with a groove, and the first positioning column 44 is engaged with the groove, so that the holder 41 is engaged with the busbar 2. In this embodiment, the requirements for the configuration accuracy of the holder 41 are relatively low, which makes configuration easier.

In some embodiments, as shown in FIG. 3 and FIG. 4, the circuit board 5 may be a flexible circuit board. The circuit board 5 has a first part 51, and the first part 51 is fixed on the holder 41 of the temperature acquisition unit 3. The temperature acquisition structure 31 is provided on the first part 51. Specifically, the temperature acquisition structure 31 may be arranged on one side of the first part 51 facing the battery 1, or may be arranged on one side of the first part 51 away from the battery 1.

The temperature acquisition structure 31 is arranged on the first part 51 of the circuit board 5 and can be directly electrically connected to the circuit board 5 to facilitate the transmission of temperature signals through the circuit board 5. The first part 51 of the circuit board 5 is fixed on the holder 41. The position of the first part 51 of the circuit board 5 can be fixed relatively through the holder 41, and can protect the temperature acquisition structure 31 disposed on the first part 51.

Exemplarily, as shown in FIG. 2, FIG. 3 and FIG. 4, the first part 51 and the holder 41 are detachably connected. Specifically, the first part 51 is engaged with the holder 41.

In some embodiments, as shown in FIG. 2, FIG. 3 and FIG. 4, the temperature acquisition unit 3 further includes a reinforcing plate 42. The reinforcing plate 42 is located on one side of the holder 41 away from the battery 1, and the extending direction of the reinforcing plate 42 and the holder 41 can be substantially parallel to the circuit board 5. The first part 51 of the circuit board 5 is located between the holder 41 and the reinforcing plate 42, and is engaged with the holder 41 and/or the reinforcing plate 42. Through the holder 41 and the reinforcing plate 42, the first part 51 of the circuit board 5 can be clamped and fixed, thereby keeping the position of the temperature acquisition structure 31 fixed.

Exemplarily, the holder 41 is provided with a position-limiting rib 43. The reinforcing plate 42 and the first part 51 of the circuit board 5 are located in the area surrounded by the position-limiting rib 43 on the holder 41, and are limited by the position-limiting rib 43 within a certain range.

Exemplarily, the first part 51 of the circuit board 5 is engaged with the holder 41. For example, the holder 41 is provided with a second positioning column 45. The first part 51 is provided with a second through hole 52 engaged with the second positioning column 45. The first part 51 of the circuit board 5 and the holder 41 are engaged with the second through hole 52 through the second positioning column 45. Preferably, the second positioning column 45 and the second through hole 52 are interference-fitted.

Further, the reinforcing plate 42 may be provided with a third through hole 46 that engages with the second positioning column 45, and the reinforcing plate 42 and the holder 41 are engaged through the second positioning column 45 and the third through hole 46. Preferably, the second positioning column 45 and the third through hole 46 are interference-fitted.

In some embodiments, as shown in FIG. 4 and FIG. 5, the temperature acquisition structure 31 is provided on one side of the first part 51 away from the battery 1, that is, arranged on one side of the first part 51 facing the reinforcing plate 42. The reinforcing plate 42 is provided with a first opening 47 for exposing the temperature acquisition structure 31. Further, the temperature acquisition unit 3 further includes a sealing structure 32 disposed at the first opening 47, and specifically, the sealing structure 32 may be a sealant, for example.

The first opening 47 of the reinforcing plate 42 can avoid the temperature acquisition structure 31 and prevent the reinforcing plate 42 from squeezing and pressing the temperature acquisition structure 31. The temperature acquisition structure 31 is accommodated at the first opening 47, and the reinforcing plate 42 surrounds the temperature acquisition structure 31, so that the temperature acquisition structure 31 can be protected.

The sealing structure 32 is disposed at the first opening 47 and located above the temperature acquisition structure 31, and the sealing structure 32 can prevent water vapor from entering the temperature acquisition structure 31 and affect the accuracy of acquired temperature.

In some embodiments, as shown in FIG. 4 and FIG. 5, the holder 41 is provided with a second opening 48 at the position where the temperature acquisition structure 31 is located. The temperature acquisition unit 3 further includes a metal sheet 33 and/or a thermally conductive buffer material 34 arranged at the second opening 48.

Exemplarily, the temperature acquisition unit 3 includes a metal sheet 33 and a thermally conductive buffer material 34 both. The metal sheet 33 and the temperature acquisition structure 31 are respectively disposed on the upper and lower sides of the first part 51 of the circuit board 5, and the thermally conductive buffer material 34 is closely attached at a position between the top cover plate of the battery 1 and the metal sheet 33.

The metal sheet 33 has good thermal conductivity, facilitating to conduct the heat from the upper cover of the battery 1 to the temperature acquisition structure 31. In the meantime, the metal sheet 33 is arranged under the first part 51 of the circuit board 5 to reinforce the first part 51, so that the temperature acquisition structure 31 on the first part 51 can be protected.

The thermally conductive buffer material 34 has good thermal conductivity and buffering effects, and can transfer the temperature from the upper cover of the battery 1 to the first part 51 of the circuit board and the temperature acquisition structure 31. Besides, the thermally conductive buffer material 34 is able to compensate for the height difference between the first part 51 of the circuit board 5 and the upper cover of the battery 1, and serves as a buffer between the two.

In this embodiment, the transmission path for temperature acquisition is specifically as follows: the upper cover of the battery 1→the thermally conductive buffer material 34→the metal sheet 33→the temperature acquisition structure 31 and the circuit board 5. The transmission path is shorter, and the accuracy of acquired temperature is higher.

In some embodiments, the battery apparatus of the disclosure further includes an upper insulating film and a lower insulating film for insulating and protecting the circuit board 5 and the busbars 2. Specifically, the circuit board 5 and the busbars 2 are located between the upper insulating film and the lower insulating film.

Exemplarily, the busbars 2, the circuit board 5 and other components are disposed between the upper insulating film and the lower insulating film. Specifically, the upper insulating film and the lower insulating film may be provided with openings for electrically connecting the circuit board 5, the busbars 2 and other structures. For example, the lower insulating film is located between the busbars 2 and the battery 1, and the lower insulating film is provided an opening at a position where the busbars 2 are electrically connected to the post terminals 11 of the batteries 1, so that the busbars 2 and the post terminals 11 of the batteries 1 are electrically connected.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery apparatus, comprising a plurality of batteries (1) arranged in parallel, at least two busbars (2) and at least one temperature acquisition unit (3), wherein in a stacking direction of the plurality of batteries (1), the temperature acquisition unit (3) is disposed between adjacent two of the busbars (2).

2. The battery apparatus according to claim 1, wherein the temperature acquisition unit (3) is in contact with a top cover of the batteries (1).

3. The battery apparatus according to claim 1, wherein the temperature acquisition unit (3) comprises a temperature acquisition structure (31) and a holder (41), the holder (41) is configured to fix the temperature acquisition structure (31), the holder (41) partially extends to one side of a lower surface of the busbars (2), and the busbars (2) are pressed on the holder (41).

4. The battery apparatus according to claim 3, wherein the holder (41) is provided with a position-limiting structure for cooperating with the busbars (2), the position-limiting structure comprises a position-limiting rib (43) and/or a positioning column (44), the position-limiting rib (43) abuts against a sidewall of the busbars (2); and the positioning column (44) is engaged with the busbars (2).

5. The battery apparatus according to claim 3, further comprising a circuit board (5), wherein the circuit board (5) has a first part (51), the first part (51) is fixed on the holder (41) of the temperature acquisition unit (3), and the temperature acquisition structure (31) is arranged on the first part (51).

6. The battery apparatus according to claim 5, wherein the temperature acquisition unit (3) further comprises a reinforcing plate (42), the reinforcing plate (42) is located on one side of the holder (41) away from the battery (1); the first part (51) is located between the holder (41) and the reinforcing plate (42), and is engaged with the holder (41) and/or the reinforcing plate (42).

7. The battery apparatus according to claim 6, wherein the temperature acquisition structure (31) is arranged on one side of the first part (51) facing the reinforcing plate (42); the reinforcing plate (42) is provided with a first opening (47) for exposing the temperature acquisition structure (31).

8. The battery apparatus according to claim 7, wherein the temperature acquisition unit (3) further comprises a sealing structure (32) disposed at the first opening (47).

9. The battery apparatus according to claim 6, wherein the holder (41) is provided with a second opening (48) at a position where the temperature acquisition structure (31) is located; the temperature acquisition unit (3) further comprises a metal sheet (33) and/or a thermally conductive buffer material (34) provided at the second opening (48).

10. The battery apparatus according to any one of claims 1-9, wherein each busbar (2) comprises two connection ends, one of the connection ends is connected to a post terminal (11) of each battery (1), and the temperature acquisition unit (3) is arranged at the other one of the connection ends of each busbar (2).

11. The battery apparatus according to any one of claims 1-9, wherein in the adjacent two busbars (2), at least one of the busbars (2) is provided with a notch (21) to form a space for accommodating the temperature acquisition unit (3).

12. The battery apparatus according to any one of claims 5-9, further comprising an upper insulating film and a lower insulating film for insulating and protecting the busbars (2) and the circuit board (5), the circuit board (5) and the busbars (2) are located between the upper insulating film and the lower insulating film.
